# EUROPEAN PATENT APPLICATION

(11) **EP 1 781 004 A1**
(43) Date of publication of application: **02.05.2007**
(21) Application number: 05777701.3
(22) Date of filing: 23.08.2005
(51) Int. Cl.: H04M 3/42

(54) **A METHOD FOR IMPLEMENTING AN AUTOMATIC ANSWERING SERVICE OF SHORT MESSAGE IN MOBILE NETWORK**

(30) Priority: 23.08.2004 CN 200410064328
(71) Applicant: Huawei Technologies Co., Ltd., Longgang District, Shenzhen Guangdong 518129 (CN)
(72) Inventor: WANG, Jie, Shenzhen,Guangdong 518129 (CN)
(74) Representative: Beresford, Keith Denis Lewis
(86) International application number: PCT/CN2005/001317
(87) International publication number: WO 2006/021147

(57) **Abstract**

A method for implementing a short message automatically answering service in mobile network is disclosed. An automatically answering content and a valid period for the automatically answer are pre-configured by a user. During the valid period, when a short message is sent to the user, the short message center may automatically answer the short message according to the content pre-configured by the user without any intervention. The method provides a more convenient service by automatically notifying the sender through the message pre-configured by the user, which can be applied to any situations when the user cannot receive a short message due to various reasons, and cannot be communicated through the short messages in a normal way. As the method requires only a little enhancement to the function of the short message centre without essential modification to the terminal software, the implementation is easy therefore.

## Description

### Field of the Invention

The present invention relates to a method for processing short message in mobile network, and more particularly, to a method for implementing a service of short message automatically answering in mobile network.

### Background of the Invention

A mobile network is able to provide a call automatically answering service already. When a mobile user is busy in work or inconvenient to answer a call, the received call can be switched to a secretary system by a pre-configured call transfer. The user can leave a voice message at the secretary system, and the voice message will be sent to a calling user. The calling user can also leave a voice message at the secretary system, and the called user can obtain the voice message left by the calling user at the secretary system. The secretary system can send the voice message and the phone number of a calling user to the called user by a short message, so as to satisfy the need for the system to automatically process a call when the user being called is away in vacation or it is inconvenient for him/her to answer the call.

Until now, however, no automatically answering service to short messages has been provided by a mobile network.

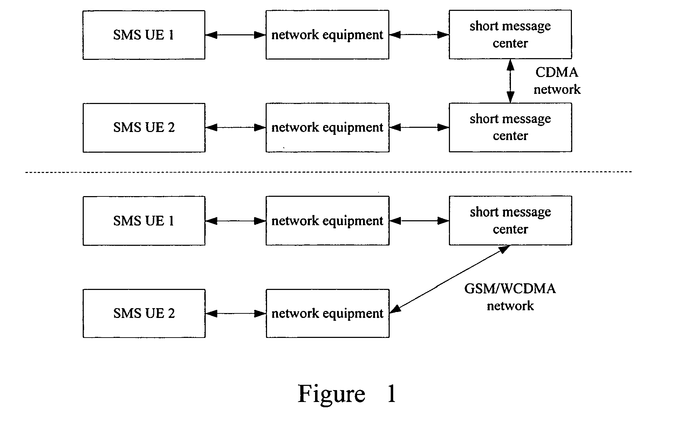

The architectures of the architecture short message service providing network in the prior art is shown in Figure 1. For different mobile networks, the architectures are also a little different. For a Code Division Multiple Access (CDMA) network, when a short message is sent between two UEs, the short message is sent to a NO. 1 short message center of the sender via a network equipment, and is routed to a NO. 2 short message center of the receiver, and is eventually forwarded to the receiver via the network equipment of the receiver. The network equipment is a Mobile Switching Center (MSC), and the message sender and the message receiver may belong to the same short message center, in which case, the NO.1 and NO.2 short message center in Figure 1 is one center. For a Global System for Mobile communication (GSM)/Wide-band Code Division Multiple Access (WCDMA) network, when a short message is sent between two UEs, the short message is sent to the NO. 1 short message center of the sender via network equipment, and is routed to the receiving network equipment directly and forwarded to the receiver. The network equipment includes MSC and Serving GPRS Support Node (SGSN).

In a normal procedure of short message processing, when a short message send from a first UE is unreachable to a second UE due to some reasons, such as the receiving user is abroad or on vacation and the second UE is powered off, the short message will be stored for a certain period in the short message center until the receiving user comes back and the second UE is powered on. The short message center then sends the stored message to the second UE. However, if the second UE keeps unreachable for quite a long time, the short message may be deleted in the short message center, which makes the sender unable to know the reason why it is impossible to contact the receiver. Therefore, it is necessary to provide a short messages automatically answering service in a mobile network.

### Summary of the Invention

An object of an embodiment of the present invention is to provide a method for implementing a short message automatically answering service in a mobile network such that the short message sending UE could be notified in time that it is impossible -or inconvenient for the receiving UE to receiving the short massage.

A method for implementing a short message automatically answering service in mobile network in accordance with the embodiments of present invention, includes the steps of:
configuring configuration information of a corresponding relationship between a subscriber identity of a UE which has subscribed to the automatically answering service and an automatically answering content in a database of the network side;
requesting configuration information of a receiving UE in the database when a short message center receiving a short message, the database returning the information of the receiving UE according to service subscribing information of the UE and the pre-configured short message automatically answering content; and
sending the automatically answering content of the short message to a sending UE when the short message center judges the receiving UE has configured the short message automatically answering content.

The method further includes:
storing the subscriber identity of the UE which has subscribed to the automatically answering service of the short message in a database of the network side;
configuring the automatically answering content of the short massage by the user and sending the automatically answering content to the database;
in the database, judging whether the UE has subscribed to the automatically answering service of the short message, if yes, storing the corresponding relationship between the subscriber identity of the UE and the automatically answering content of the short message configured by the user in the database; otherwise, the configuration fails.

The UE which has subscribed to the automatically answering service sends the automatically answering content of the short message to the database via a short message format or an Unstructured Supplementary Service Data (USSD) mode.

The automatically answering content of the short message is configured by directly logging in the WEB service site of the operator and is stored in the database by the operator.

The step of configuring configuration information of the corresponding relationship between the subscriber identity of a UE which has subscribed to the automatically answering service and the automatically answering content of a short message in the database of the network side, further comprises configuring an additional configuration information of a corresponding relationship between the subscriber identity of the UE which has subscribed to the automatically answering service and a valid period for automatically answering; and
judging whether the current time is within the valid period, if yes, sending the automatically answering content of the short message to the sending UE which has sent the short message; otherwise, continuing a normal procedure of receiving the short message.

The method further includes:
the database checking periodically whether each of the stored automatically answering content is still valid, if not, deleting, immediately or after a delay, the expired automatically answering content.

The database and the short massage center are two separated entities which exist independently in the network.

The database is part of the short massage center which the UE which has subscribed to the automatically answering service belongs to.

The valid period is a valid period of time or an expiry date, and if it is a valid period of time, the default starting time is the time when the UE which has subscribed to the automatically answering service sends the configuration information.

In accordance with the method provided by the embodiment of the present invention, a user can configure the automatically answering content in advance, when the short message center receives a short message which is supposed to be sent to this user, the center can answer the short message automatically without any intervention by the user. The method makes it possible to provide more convenient services for users and greatly improves the service quality of the network.

### Brief Description of the Drawings

Figure 1 shows network architecture of a short message service;
Figure 2 is a flowchart describing a configuration of an automatically answering content and a valid period by a user according to an embodiment of the present invention; and

Figure 3 is a flowchart describing an automatically answering process of saving the automatically answering content to short messages in a database according to the embodiment of the present invention.

### Detailed Description of the Invention

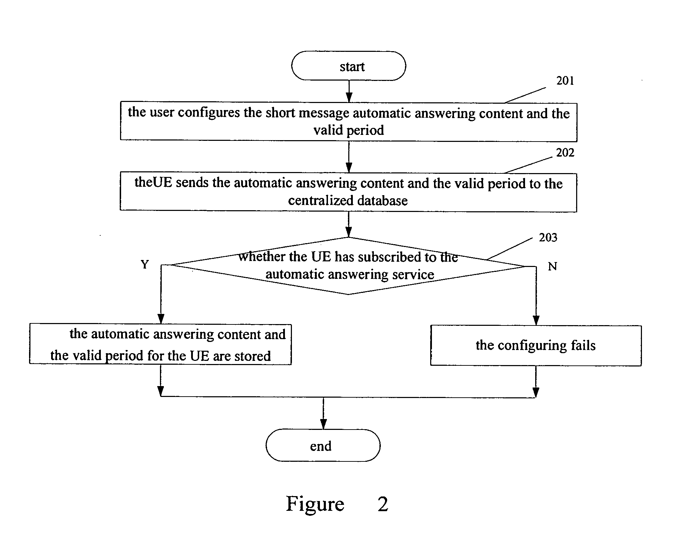

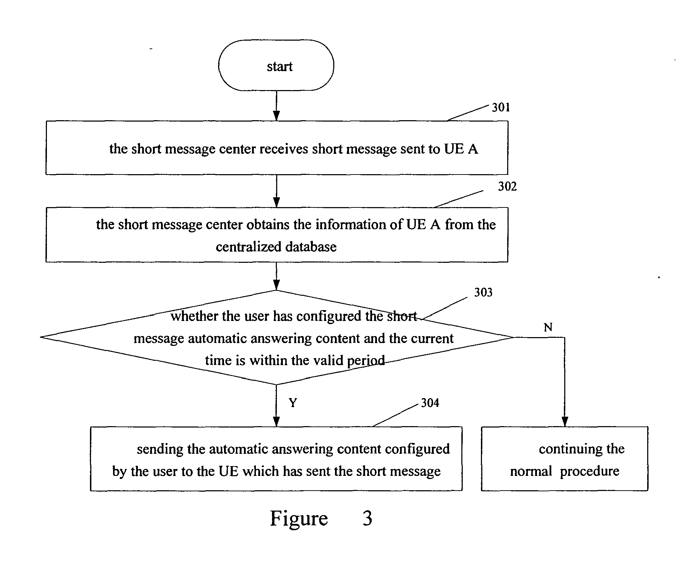

Referring to the Figures.2 and 3, the method for implementing a short message automatically answering service in mobile network in accordance with the embodiment of present invention establishes a corresponding relationship between a subscriber identity of a UE and a short message automatically answering content, of which the UE has subscribed to the automatically answering service, and the short message automatically answering content is pre-configured by the user in a database of a network side, preferably in a centralized database of the network side. When receiving a short message, a short message center requests configuration information of the receiving UE in the centralized database. The configuration information includes service subscribing information that whether the user has subscribed to the service and the automatically answering content pre-configured by the user if the user has subscribed. The centralized database then returns user information according to the configuration information of the receiving UE to the short message center. The short message center judges whether there is an automatically answering content to short messages for the receiving UE, and sends the pre-configured short message automatically answering content to the sender UE, if there is.

It should be noted that the user needs to apply to the operator for subscribing the automatically answering service of short message such that the operator could implement the corresponding charging and controlling. In a GSM/WCDMA network, because the short message is not forwarded via the short message center which the receiver of the short message belongs to, the centralized database storing the phone number of the UE which has subscribed to the automatic answering service of short message exists independently in the network. In a CDMA network, because the short message must be forwarded via the short message center which the receiver of the short message belongs to, the centralized database storing the phone number of the UE which has subscribed to the automatically answering service of short message may be part of the short message center which the receiver belongs to, or exist independently in the network.

In addition, a user can further configure a valid period of the automatically answering content which will be stored in the centralized database together with the automatically answering content at the same time. In this way, after receiving a short message, the short message center obtains the configuration information of the corresponding relationship of the receiver from the centralized database which includes an automatically answering content to short messages and the valid period. Then, the short message center needs to further judge whether the current time is within the valid period that has been configured while judging whether there is an automatically answering content to short messages for the receiving UE, if the current time is within the valid period, the automatically answering content is sent to the UE which has sent the short message; otherwise, continue the normal procedure of receiving a short message.

Furthermore, an automatically answering content to short messages could be composed of any characters, and the valid period includes a time period for automatically answering or an expiring time. During the valid period, all the short messages which are supposed to be sent to this user by other users could be answered automatically by the short message center.

Figure 2 is a flowchart of configuring the automatically answering content and valid period by a user. The specific steps are given hereinafter:
Step 201: the user configures an automatically answering content to short messages and the automatically answering valid period on the UE.

The operators may define a fixed format of an automatically answering content to short messages and the automatically answering valid period, for example, the first part of the format contains the automatically answering content, and the second part is the automatically answering valid period while some special characters such as *, #, etc. can be inserted between the two parts as a separator. There is usually no need to define the starting time for the valid period. The starting time is based on the time when the configuration information is sent by the UE, for example, if the valid period is a parameter of time period, such as 3600 seconds or 7200 seconds, it means that after the configured message is sent by the UE, the configuration information is valid in this period of time; if the valid period is a specific time, such as 2004-07-01, it means that the short message is valid before the fixed time of 2004-07-01.

Step 202: the UE sends the automatically answering content and the automatically answering valid period configured by the user to the centralized database.

In this step, the UE may send the configuration information including the answering content and valid period to the network side via a short message, or send the configuration information to the network side via Unstructured Supplementary Service Data (USSD).

For example, the operator may designate a special target number of short message, such as 9190, and UE can send the configuration information to 9190 via a short message, after receiving a short message of which the receiving number is the special number 9190, the short message center takes this short message as the automatically answering content which is configured actively by the user, and sends the information of the short message to the centralized database.

Step 203: in accordance with the phone number stored in the centralized database, which each represents a short message automatically answering service subscribed UE, the network side judges whether this UE has subscribed this service; if this UE has subscribed this service, the network stores the automatically answering content and the automatically answering valid period of the UE in the centralized database; otherwise, the configuring fails.

Obviously, the user may also configure the automatically answering content and the automatically answering valid period by directly logging in the WEB service site of the operator, and the maintenance personnel of the operator can store the information configured by the user in the centralized database; or the user may notify the maintenance personnel of the configuration information by dialing a special service number, and the maintenance personnel can store the information configured by the user in the centralized database.

Figure 3 shows the flowchart of automatically answering by storing an automatically answering content to short messages in a centralized database, which is applicable in a GSM/WCDMA network or a CDMA network and includes the steps of:
Step 301: the short message center receives a short message sent to UE A, wherein the subscriber identity of UE A is included.
Step 302: the short message center obtains the information of UE A from the centralized database, i.e. obtains the UE information corresponding to the subscriber identity of this UE stored in the centralized database.
For example, UE A has subscribed the automatically answering service of short massage, and an automatically answering content to short messages and the valid period configured by the user in advance are stored. Therefore, the centralized database can return the corresponding short message automatically answering content and the valid period configured by the user. If this UE has not subscribed to the short message automatically answering service, or if, although this UE has subscribed to the service, the current centralized database has not stored the automatically answering content configured by this user, the centralized database will return to the short message center that this user has no right of automatically answering service or has configured no automatically answering content.
Step 303: the short message center judges whether the user has configured the short message automatic content according to the received information, if the user has configured the short message automatic content, further judges whether the current time is within the valid period for automatically answering, if the current time is within the valid period for automatically answering, perform Step 304, otherwise continue the normal procedure of receiving a short message.
That is to say, if the short message center receives an automatically answering content to short messages and automatically answering valid period which are returned by the centralized database, it needs to judge whether the current time is within the valid period for automatically answering, if the current time is within the valid period for automatically answering, perform Step 304, if not, i.e., the user has no right of automatically answering service, or although the user has the right, he/she has configured no automatically answering content, or the current time is not within the valid period for automatically answering configured by the user, then the short message center continues the normal procedure of receiving a short message.
Step 304: the short message center sends the automatically answering content configured by the user to the UE which has sent the short message.

The centralized database periodically judges whether all the stored short message automatically answering contents are still valid, i.e. judges whether the current time has exceeded the ending time of the valid period, if the current time has exceeded the ending time of the valid period, the centralized database may immediately delete the expired information configured by the user or delete it after a delay.

The above description is merely preferred embodiments of the invention and is not intended to limit the protection scope thereof. It will be apparent to those skilled in the art that various modifications and replacements can be made in the present invention without departing from the spirit and scope thereof. Thus, it is intended that such modifications and replacements of the present invention should be covered by the protection scope as claimed by the appended claims.

## Claims

1. A method for implementing a short message automatically answering service in mobile network, comprising:
configuring configuration information of a corresponding relationship between a subscriber identity of a UE which has subscribed to the automatically answering service and an automatically answering content in a database of the network side;
requesting configuration information of a receiving UE in the database when a short message center receiving a short message, the database returning the information of the receiving UE according to service subscribing information of the UE and the pre-configured short message automatically answering content; and
sending the automatically answering content of the short message to a sending UE when the short message center judges the receiving UE has configured the short message automatically answering content.

2. The method according to Claim 1, wherein the method further comprises:
storing the subscriber identity of the UE which has subscribed to the short message automatically answering service in a database of the network side;
configuring the automatically answering content of the short massage by the user and sending the automatically answering content to the database;
in the database, judging whether the UE has subscribed to the automatically answering service of the short message , if yes, storing the corresponding relationship between the subscriber identity of the UE and the automatically answering content of the short message configured by the user in the database; otherwise, the configuration fails.

3. The method according to Claim 2, wherein the UE which has subscribed to the automatically answering service sends the automatically answering content of the short message to the database via a short message format or an Unstructured Supplementary Service Data (USSD) mode.

4. The method according to Claim 1, wherein the automatically answering content of the short message is configured by directly logging in the WEB service site of the operator and is stored in the database by the operator.

5. The method according to Claim 1, wherein the step of configuring configuration information of the corresponding relationship between the subscriber identity of a UE which has subscribed to the automatically answering service and the automatically answering content of a short message in the database of the network side, further comprises configuring an additional configuration information of a corresponding relationship between the subscriber identity of the UE which has subscribed to the automatically answering service and a valid period for automatically answering; and
judging whether the current time is within the valid period, if yes, sending the automatically answering content of the short message to the sending UE which has sent the short message; otherwise, continuing a normal procedure of receiving the short message.

6. The method according to Claim 5, further comprising:
the database checking periodically whether each of the stored automatically answering content is still valid, if not, deleting, immediately or after a delay, the expired automatically answering content.

7. The method according to Claim 1, wherein the database and the short massage center are two separated entities which exist independently in the network.

8. The method according to Claim 1, wherein the database is part of the short massage center which the UE which has subscribed to the automatically answering service belongs to.

9. The method according to Claim 5, wherein the valid period is a valid period of time or an expiry date, and if it is a valid period of time, the default starting time is the time when the UE which has subscribed to the automatically answering service sends the configuration information.
